# FASCICULE DE BREVET EUROPEEN

(11) **EP 2 184 434 B1**
(45) Date de publication et mention de la délivrance du brevet: **21.10.2015**
(21) Numéro de dépôt: 09175354.1
(22) Date de dépôt: 09.11.2009
(51) Int. Cl.: E06B 9/40, E06B 9/72, E06B 9/86

(54) **Volet roulant motorisé**
Motorisierter Rolladen
Motorized roller shutter

(30) Priorité: 10.11.2008 FR 0857626
(43) Date de publication de la demande: 12.05.2010
(73) Titulaire: Delta Dore, 35270 Bonnemain (FR)
(72) Inventeur: Schreiber, Yannick, 35270, BONNEMAIN (FR); Berhault, Gilles, 35270, BONNEMAIN (FR); Poujaud, Laurent, 35270, BONNEMAIN (FR)
(74) Mandataire: Maillet, Alain

(56) Documents cités:
- EP-A- 0 439 422
- WO-A1-02/10545
- DE-A1- 19 706 209
- FR-A1- 2 871 839

## Description

La présente invention concerne un procédé de détection d'une tentative d'ouverture du tablier d'un dispositif d'obturation motorisé.

On connaît un dispositif d'obturation motorisé d'une baie comprenant un tablier et des moyens d'entraînement comprenant un tube logeant un moteur prévu pour entraîner en rotation un tube d'enroulement coaxial sur lequel est enroulé le tablier, lui-même constitué d'une pluralité de lamelles adjacentes et destiné, lorsqu'il est en position basse, à obturer la baie.

Généralement, pour détecter une tentative d'intrusion par ce type de dispositif d'obturation, il est prévu un capteur linéaire qui s'étend tout le long du tablier et en bas de celui-ci. Lorsque le tablier est en position basse, c'est-à-dire lorsque le dispositif d'obturation est fermé, une tentative de soulèvement du tablier implique une action sur le capteur linéaire. Cette action est détectée et cette détection est transmise à une centrale de sécurité qui peut alors déclencher une alarme.

Ce mode de réalisation nécessite la mise en place d'un détecteur linéaire, généralement coûteux, ce qui entraîne une augmentation du prix du dispositif d'obturation motorisé.

Le document DE-A-197 06 209 divulgue un dispositif d'obturation permettant de détecter l'arrivée d'un tablier sur un obstacle. Le dispositif de ce document détecte le basculement de moyens de détection d'une deuxième position (tablier suspendu) à une première (tablier en butée).

Le document DE-A-197 06 209 ne permet pas de détecter une tentative d'effraction par soulèvement du tablier.

Un objet de la présente invention est de proposer un procédé de détection d'une tentative d'ouverture du tablier d'un dispositif d'obturation motorisé d'une baie qui ne présente pas les inconvénients de l'art antérieur, et qui en particulier, ne nécessite pas la mise en place d'éléments de détection supplémentaires spécifiques.

A cet effet, est proposé un procédé de détection selon la revendication 1.

Les autres revendications présentent des modes de réalisation particuliers.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue éclatée d'un dispositif d'obturation motorisé d'une baie selon l'invention,
la Fig. 2 est un détail du dispositif d'obturation motorisé de la Fig. 1 lorsque le tablier descend ou monte,
la Fig. 3 est un détail du dispositif d'obturation motorisé de la Fig. 1 lorsque le tablier est en butée basse, et
la Fig. 4 est un organigramme d'un procédé de détection d'une tentative d'intrusion par relevage du tablier du dispositif d'obturation motorisé selon l'invention.

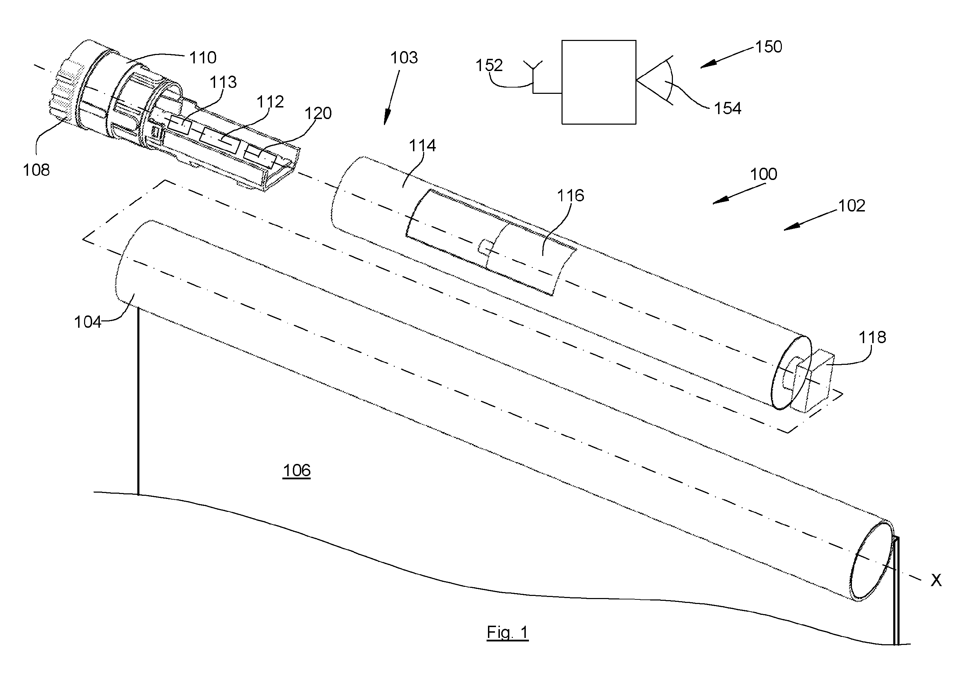

La Fig. 1 montre un dispositif d'obturation motorisé d'une baie 100 selon l'invention qui est destiné à venir s'installer dans un coffre de volet d'un bâtiment au-dessus de la baie à obturer. Le dispositif d'obturation motorisé 100 comprend:
- un tablier 106, et
- des moyens d'entraînement 102 constitués d'un tube moteur 103 et d'un tube d'enroulement 104 et destinés à entraîner en montée et en descente le tablier 106.

Le tube moteur 103 est coaxial avec le tube d'enroulement 104 et il est disposé à l'intérieur de celui-ci. La fixation du tablier 106 sur le tube d'enroulement 104 s'effectue à l'aide d'un dispositif de verrouillage souple ou rigide.

Généralement, le tablier 106 est constitué de lattes fixées les unes aux autres de manière à présenter un espace entre elles. Lorsque la latte la plus basse du tablier 106 arrive en butée, la latte suivante continue à descendre jusqu'à venir en butée contre la latte la plus basse, et ainsi de suite jusqu'à la latte fixée au tube d'enroulement 104, ainsi le tablier 106 devient progressivement rigide en partant de la latte la plus basse jusqu'au tube d'enroulement 104 et à travers la prise de l'arbre moteur 118 jusqu'au tube moteur 103.

La montée du tablier 106 s'effectue par enroulement dudit tablier autour du tube d'enroulement 104 qui est entraîné en rotation par le tube moteur 103 autour de son axe X. La descente du tablier 106 s'effectue de la manière inverse.

Le tube moteur 103 comprend un flasque 108 qui est monté fixe dans le coffre du volet roulant et un palier 110 monté mobile en rotation autour de l'axe X sur le flasque 108. Cette rotation possède un débattement limité d'environ 20° autour de l'axe X. Le tube moteur 103 comprend également des moyens moteur 116, comme par exemple, un moteur, un frein et un réducteur. Le palier mobile 110 porte des moyens de détection 113. Le volet roulant motorisé 100 comprend également des moyens de commande 112 et des moyens de communication 120 qui, dans le mode de réalisation de l'invention présenté sur les Figs., sont disposés sur le palier mobile 110. Les moyens de commande 112 permettent de commander le démarrage et l'arrêt des moyens d'entraînement 102, et en particulier des moyens moteur 116.

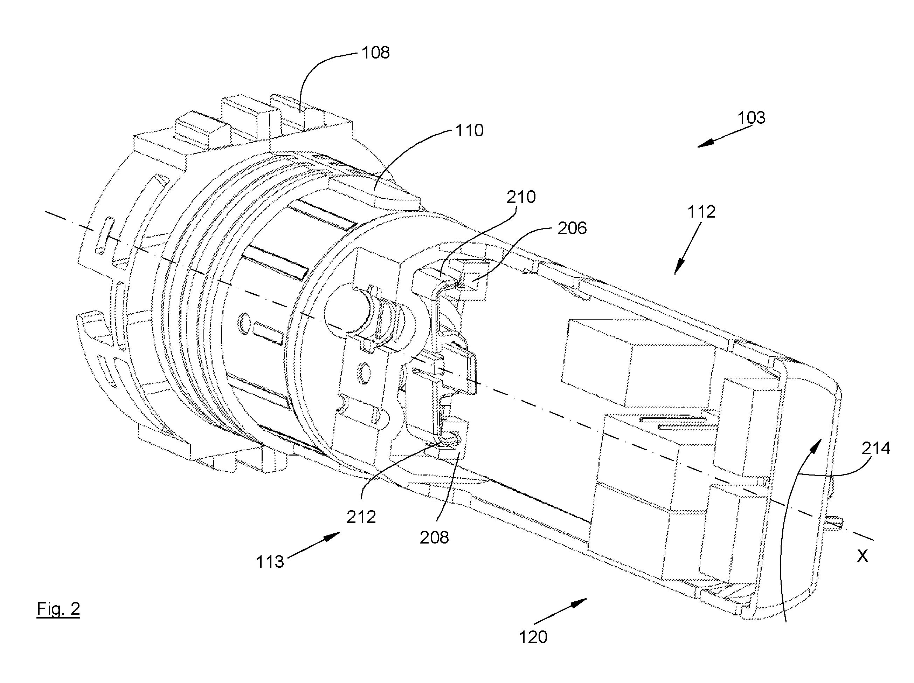

La Fig. 2 montre un détail du tube moteur 103 lorsque le tablier 106 descend ou monte.

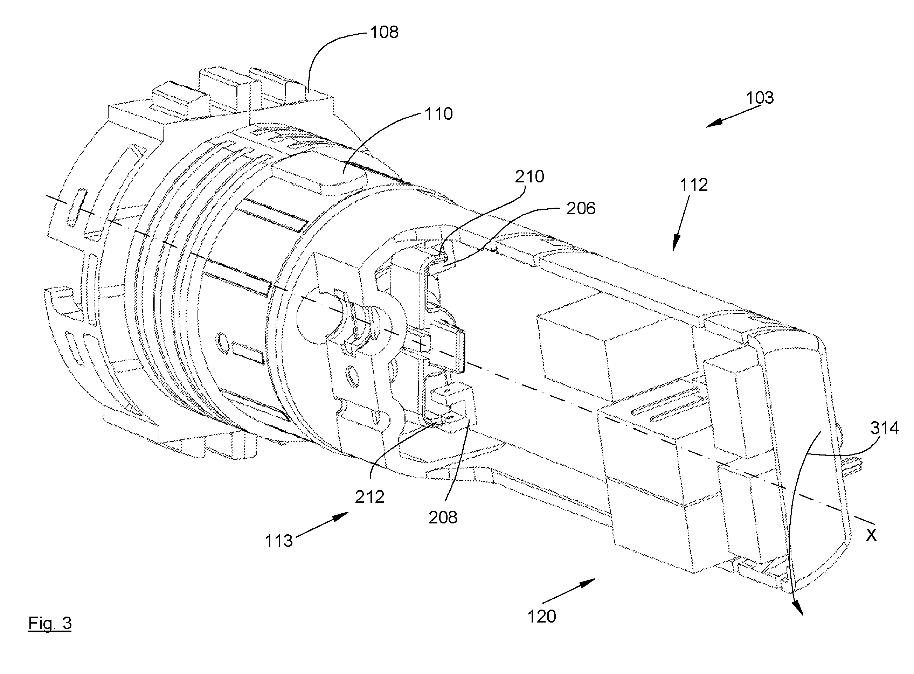

La Fig. 3 montre un détail du tube moteur 103 lorsque le tablier 106 est en butée basse.

Les moyens de détection 113 sont destinés à être alternativement dans un premier état de détection (Fig. 3) lorsque le tablier 106 est en butée basse, et dans un deuxième état de détection (Fig. 2) lorsque le tablier 106 n'est pas en butée basse et est suspendu, c'est-à-dire lorsque la latte la plus basse ne repose pas sur le sol. Dans le mode de réalisation de l'invention présenté sur les Figs., les moyens de détection 113 comprennent des capteurs destinés à détecter soit l'arrivée du tablier 106 en butée haute ou basse, soit le sens de progression du tablier 106, c'est-à-dire sa montée ou sa descente.

Le tube moteur 103 comprend également un tube de protection 114 qui s'emboîte, par l'une de ces extrémités, sur le palier 110 et à l'intérieur duquel sont disposés les moyens de commande 112, les moyens de détection 113 et les moyens moteur 116. Les moyens moteur 116 comprennent un arbre moteur 118 qui sort par l'autre extrémité du tube de protection 114. L'arbre moteur 118 est muni d'une prise mâle qui coopère avec une prise femelle que le tube d'enroulement 104 comprend.

La coopération entre la prise de l'arbre moteur 118 et la prise du tube d'enroulement 104 permet l'entraînement en rotation de ce dernier lorsque l'arbre moteur 118 tourne.

La limitation du débattement angulaire du palier 110 par rapport au flasque 108 est réalisée par un plot du palier 110 qui est introduit dans une lumière allongée du flasque 108. Le débattement angulaire est ainsi limité par la mise en contact du plot avec les surfaces d'extrémités délimitant la lumière allongée.

Les moyens de détection 113 comprennent dans le mode de réalisation de l'invention présenté ici, un détecteur haut 206 et un détecteur bas 208. Chaque détecteur 206, 208 prend ici la forme d'un détecteur optique par rupture de faisceau. Le flasque 108 comprend un bras haut 210 et un bras bas 212, qui s'étendent chacun à travers la zone où sont disposés les moyens de détection 113 et qui sont fixes par rapport au flasque 108. Le bras haut 210 est destiné à coopérer avec le détecteur haut 206 et le bras bas 212 est destiné à coopérer avec le détecteur bas 208.

Ainsi, lorsque le tablier 106 descend ou monte, le poids du tablier 106 entraîne l'apparition d'un couple sur le tube moteur 103 dans le sens de la flèche 214 ce qui entraîne la mise en appui du plot contre l'une des surfaces d'extrémité de la lumière allongée et la coopération du bras bas 212 et du détecteur bas 208, tandis que le bras haut 210 ne coopère pas avec le détecteur haut 206. Les moyens de commande 112 déterminent ainsi que le tablier 106 poursuit normalement sa descente ou sa montée.

La Fig. 3 montre le détail du tube moteur 103 lorsque le tablier 106 est en butée basse. Lorsque le tablier 106 arrive en butée basse, le poids de ce dernier est au moins partiellement repris par la butée, ce qui entraîne une diminution du couple et à terme une annulation et une inversion du couple qui s'exerce sur le tube moteur 103. Il s'exerce alors, sur le tube moteur 103, un couple représenté par la flèche 314. Le tube moteur 103 pivote alors autour de l'axe X de manière à ce que le plot vienne en appui contre l'autre surface d'extrémité de la lumière allongée. Ce basculement du tube moteur 103 entraîne la coopération du bras haut 210 et du détecteur haut 206, tandis que le bras bas 212 ne coopère plus avec le détecteur bas 208. Les moyens de commande 112 déterminent ainsi que le tablier 106 est en butée basse.

Les moyens de communication 120 sont destinés à communiquer avec une centrale de sécurité 150, par exemple du type alarme. Les moyens de communication 120 peuvent être des moyens filaires ou radio ou autres.

La centrale de sécurité 150 comprend des moyens de communication 152 destinés à dialoguer avec les moyens de communication 120 des moyens de commande 112 et des moyens d'avertissement 154, par exemple du type haut-parleur.

Lorsque le tablier 106 est en butée basse, un relèvement de ce dernier entraîne le basculement du tube moteur 103 dans la position de la Fig. 2. Ce basculement intervient lorsque les espaces entre les lattes ont été rétablis et que la latte la plus basse commence à se soulever, c'est-à-dire lorsque le poids du tablier 106 commence à agir sur le tube moteur 103. Le bras bas 212 coopère avec le détecteur bas 208, tandis que le bras haut 210 ne coopère pas avec le détecteur haut 206. Les moyens de commande 112 déterminent ainsi que le tablier 106 est en position basse mais non en butée. Cette position définit une position d'attente.

Lorsque l'utilisateur du dispositif d'obturation motorisé 100 active la centrale de sécurité 150, celle-ci communique avec les moyens de communication 120, qui à leur tour communiquent avec les moyens de commande 112 pour les informer du passage en phase d'avertissement de la centrale de sécurité 150. Les moyens de commande 112 commandent les moyens d'entraînement 102 de manière à amener le tablier 106 en position d'attente.

Les moyens de détection 113 sont alors dans la position de la Fig. 2. Si un individu tente de s'introduire dans le bâtiment où est disposé le dispositif d'obturation motorisé 100, il doit d'abord soulever le tablier 106. Ce soulèvement entraîne le raidissement du tablier 106 par disparition successive des espaces entre les lattes. Lorsque l'espace de la latte la plus haute a disparu, la poursuite du soulèvement entraîne le basculement du tube moteur 103 dans la position de la Fig. 3. Les moyens de détection 113 changent alors d'état ce qui est perçu par des moyens de scrutation qui vérifient l'état de moyens de détection 113, et en particulier vérifient le basculement des moyens de détection 113 du deuxième état de détection (Fig. 2) vers le premier état de détection (Fig. 3).

Les moyens de commande 112 sont alors informés par les moyens de scrutation de ce basculement qui est interprété comme une tentative d'ouverture du tablier 106 par soulèvement et donc comme une tentative d'intrusion. Les moyens de commande 112 génèrent alors un message représentatif d'une tentative d'ouverture du tablier 106, et le transmettent à la centrale de sécurité 150 via les moyens de communication 120. La centrale de sécurité 150 peut alors réagir en conséquence avant que l'individu ait eu le temps de pénétrer dans le bâtiment.

Le tablier 106 peut ensuite être remis en position d'attente par exemple par descente du tablier 106 en butée basse et relèvement jusqu'à la position d'attente.

Lorsque le tablier 106 est en butée basse, les moyens de détection 113 sont dits dans un premier état de détection (Fig. 3), et lorsque le tablier 106 est suffisamment remonté pour entraîner le basculement des moyens de détection 113 du fait de la traction du tablier 106 sous l'effet de la pesanteur, les moyens de détection 113 sont dits dans un deuxième état de détection (Fig. 2).

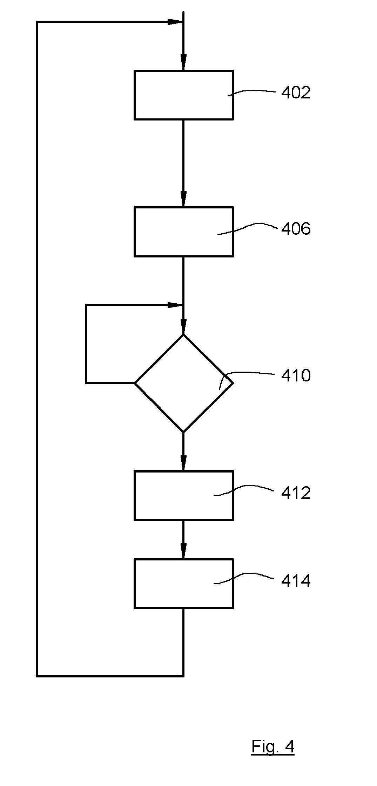

La Fig. 4 montre un organigramme d'un procédé de détection d'une tentative d'ouverture par relevage du tablier 106 du dispositif d'obturation motorisé 100.

Les moyens de commande 112 sont généralement constitués d'un processeur qui reçoit les informations des moyens de communication 120, les moyens de scrutation et des moyens de détection 113 et envoie des ordres aux moyens de communication 120 et aux moyens d'entraînement 102.

Après que les moyens de commande 112 aient reçu l'information selon laquelle la centrale de sécurité 150 est activée, le procédé comprend:
- une étape de descente 402 du tablier 106 jusqu'à ce que les moyens de détection 113 basculent dans le premier état de détection (Fig. 3), étape au cours de laquelle les moyens de commande 112 commandent les moyens d'entraînement 102 en descente,
- une étape de montée 406 du tablier 106 jusqu'à ce que les moyens de détection 113 basculent dans le deuxième état de détection (Fig. 2), étape au cours de laquelle les moyens de commande 112 commandent les moyens d'entraînement 102 en montée,
- une étape de scrutation 410 par les moyens de scrutation de l'état des moyens de détection 113 qui boucle sur elle-même tant que les moyens de détection 113 ne basculent pas du deuxième état de détection (Fig. 2) vers le premier état de détection (Fig. 3),
- une étape de génération 412 d'un message représentatif d'une tentative d'ouverture du tablier 106 par soulèvement par les moyens de commande 112, et
- une étape de transmission 414 dudit message par les moyens de commande 112 à la centrale de sécurité 150 via les moyens de communication 120.

Après l'étape de transmission 414, le procédé peut boucler sur l'étape de commande en descente 402 pour repositionner le tablier 106 en position d'attente.

L'étape de détection de la position de montée 406 peut être suivie d'une étape de temporisation au cours de laquelle la remontée du tablier 106 est poursuivie durant un très court laps de temps de l'ordre de 1 à 2 secondes. Cette remontée supplémentaire permet d'assurer que le tablier 106 est bien en position d'attente et que la détection du basculement des moyens de détection 113 dans le deuxième état de détection (Fig. 2) n'est pas due à des évènements extérieurs naturels comme par exemple, un grand coup de vent, qui aurait déclenché une fausse détection en frappant le tablier 106.

L'étape de scrutation 410 est réalisée par les moyens de scrutation, qui sont par exemple intégrés aux moyens de commande 112. Cette étape de scrutation 410 boucle sur elle-même si aucun basculement des moyens de détection 113 du deuxième état de détection (Fig. 2) vers le premier état de détection (Fig. 3) n'est observé. Le processus passe à l'étape de génération 412, si au cours de l'étape de scrutation 410, un basculement des moyens de détection 113 du deuxième état de détection (Fig. 2) vers le premier état de détection (Fig. 3) est observé.

L'étape de transmission 414 correspond à la transmission à la centrale de sécurité 150 par les moyens de commande 112 via les moyens de communication 120, du message selon lequel une tentative d'ouverture du tablier 106 a lieu.

La disparition des espaces entre les lattes par soulèvement entraîne un soulèvement de la latte la plus basse de l'ordre de quelques centimètres et ce soulèvement n'est pas suffisant pour permettre le passage d'un individu.

L'invention peut également être mise en oeuvre lorsque le tablier est plein, c'est-à-dire qu'il n'y a pas de latte ou qu'il n'y a pas d'espace entre les lattes. La détection de la tentative d'intrusion s'effectue plus rapidement puisque le moindre soulèvement du tablier 106 entraîne le basculement des moyens de détection 113.

Les moyens permettant la détection d'une tentative d'intrusion sont donc les moyens de détection 113 qui sont les moyens habituels au fonctionnement normal du dispositif d'obturation motorisé 100, c'est-à-dire à son ouverture et à sa fermeture et ceci sans qu'il soit nécessaire d'ajouter des éléments supplémentaires.

Bien entendu, la présente invention n'est pas limitée aux exemples et modes de réalisation décrits et représentés, mais elle est susceptible de nombreuses variantes accessibles à l'homme de l'art.

Par exemple, l'invention a été plus particulièrement décrite dans le cas où les moyens de détection 113 sont constitués de deux détecteurs optiques, mais l'invention s'applique de la même manière dans le cas d'interrupteurs. L'invention peut s'appliquer également avec un seul détecteur qui a un état (0 ou 1) dans le premier état et un état (1 ou 0) dans le deuxième état.

## Revendications

1. Procédé de détection d'une tentative d'ouverture d'un tablier (106) d'un dispositif d'obturation motorisé (100) d'une baie, ledit dispositif d'obturation motorisé (100) comprenant:
- un tablier (106) constitué de lattes fixées les unes aux autres et présentant un espace entre elles et présentant une position en butée basse lorsque les lattes sont en butée les unes contre les autres et que la latte la plus basse est en butée entraînant la rigidification du tablier (106), et une position suspendue lorsque la latte la plus basse n'est pas en butée, et
- des moyens d'entraînement (102) comportant un tube d'enroulement (104) auquel la latte la plus haute est fixée et autour duquel ledit tablier (106) s'enroule en montée et d'où il se déroule en descente, et un tube moteur (103) entraînant en rotation ledit tube d'enroulement (104), ledit tube moteur (103) comportant un flasque (108) fixe et un palier (110) mobile en rotation autour de l'axe dudit tube moteur (103) sur le flasque (108), ledit tube moteur (103) étant mobile en rotation entre une première position lorsque le tablier (106) est en position en butée basse et une deuxième position lorsque le tablier (106) est en position suspendue, ledit tube moteur (103) comportant également un tube de protection (114) s'emboîtant sur le palier (110), par l'une de ses extrémités, et dans lequel logent des moyens de détection (113) portés par le palier , ledit flasque (108) présentant une lumière allongée et le palier (110) présentant un plot introduit dans ladite lumière, le plot réalisant la limitation du débattement angulaire du palier par rapport au flasque, et le dispositif d'obturation motorisé (100) comportant en outre :
- des moyens moteurs (116) logeant dans le tube de protection (114) et comprenant un arbre moteur (118) muni d'une prise mâle coopérant avec une prise femelle du tube d'enroulement (104),
- les moyens de détection (113) comportant un détecteur haut (206), un détecteur bas (208) sous la forme de détecteurs optiques par rupture de faisceau, un bras haut (210) et un bras bas (212) fixes sur le flasque (108) et destinés à être dans un premier état de détection (Fig. 3) où le bras haut (210) coopère avec le détecteur haut (206) tandis que le bras bas ne coopère pas avec le détecteur bas lorsque le tube moteur (103) est dans la première position, et dans un deuxième état de détection (Fig. 2) où le bras bas (212) coopère avec le détecteur bas (208) tandis que le bras haut ne coopère pas avec le détecteur haut lorsque le tube moteur (103) est dans la deuxième position,
- des moyens de scrutation destinés à vérifier le basculement des moyens de détection (113) du deuxième état de détection (Fig. 2) vers le premier état de détection (Fig. 3),
- les moyens de commande (112) destinés à générer un message représentatif d'une tentative d'ouverture du tablier (106) lorsque les moyens de scrutation détectent le basculement des moyens de détection (113), et
- des moyens de communication (120) destinés à transmettre ledit message, le procédé comprenant:
- une étape de descente (402) du tablier (106) jusqu'à ce que les moyens de détection (113) basculent dans le premier état de détection (Fig. 3), étape au cours de laquelle les moyens de commande (112) commandent les moyens d'entraînement (102) en descente,
- une étape de montée (406) du tablier (106) jusqu'à ce que les moyens de détection (113) basculent dans le deuxième état de détection (Fig. 2), étape au cours de laquelle les moyens de commande (112) commandent les moyens d'entraînement (102) en montée,
- une étape de scrutation (410) par les moyens de scrutation de l'état des moyens de détection (113) qui boucle sur elle-même tant que les moyens de détection (113) ne basculent pas du deuxième état de détection (Fig. 2) vers le premier état de détection (Fig. 3),
- une étape de génération (412) d'un message représentatif d'une tentative d'ouverture du tablier (106) par les moyens de commande (112), et
- une étape de transmission (414) dudit message par les moyens de commande (112) via les moyens de communication (120).

2. Procédé de détection selon la revendication 1, **caractérisé en ce que**, après l'étape de transmission (414), le procédé boucle sur l'étape de descente (402).

3. Procédé de détection selon l'une des revendications 1 ou 2, **caractérisé en ce que** l'étape de montée (406) est suivie d'une étape de temporisation au cours de laquelle la remontée du tablier (106) est poursuivie.

## Patentansprüche

1. Verfahren zur Detektion eines Öffnungsversuchs an einem Rolladenpanzer (106) einer motorisierten Schließeinrichtung (100), wobei die motorisierte Schließeinrichtung folgendes umfasst :
- einen Rolladenpanzer (106) bestehend aus aneinander befestigten und voneinander beabstandeten Lamellen, die eine untere Anschlagsstellung aufweisen, in welcher die Lamellen aneinanderstoßen und sich die unterste Lamelle am Anschlag befindet, was zur Versteifung des Rolladenpanzers (106) führt und eine aufgehängte Stellung, in welcher sich die unterste Lamelle nicht am Anschlag befindet, und
- Antriebsmittel (102), die ein Aufrollrohr (104) umfassen, an dem die oberste Lamelle befestigt ist und um das sich der genannte Rolladenpanzer beim Hochziehen aufwickelt und beim Herunterlassen abwickelt, und ein Motorrohr (103), das das genannte Aufrollrohr (104) drehend antreibt, wobei das Motorrohr (103) einen feststehenden Flansch (108) umfasst und ein, auf dem Flansch (108) um die Achse de Motorrohrs (103) drehbewegliches Lager (110), wobei das genannte Motorrohr (103) zwischen einer ersten Stellung, wenn der Rolladenpanzer (106) sich in der unteren Anschlagstellung befindet, und einer zweiten Stellung, wenn der Rolladenpanzer (106) sich in aufgehängter Stellung befindet, drehbeweglich ist und wobei das Motorrohr (103) auch ein Schutzrohr (114) umfasst, das mit einem seiner Enden auf dem Lager (110) aufrastet, und in dem sich vom Lager getragene Detektionsmittel (113) befinden, wobei der genannte Flansch (108) ein Langloch und das Lager (110) einen Zapfen aufweist, der in das Langloch eingeführt ist, wobei der Zapfen die Begrenzung des Winkelausschlags des Lagers zum Flansch bewirkt und die motorisierte Schließeinrichtung (100) zudem folgendes umfasst :
- Antriebsmittel (116), die sich in dem Schutzrohr (114) befinden und eine Motorwelle (118) umfassen, die mit einem Stecker ausgestattet ist, der mit einer Buchse des Aufwickelrohrs (104) zusammenwirkt.
- Detektionsmittel (113), die einen oberen Detektor (206) und einen unteren Detektor (208) in Form von optischen Strahlunterbrechungsdetektoren umfassen, auf dem Flansch (108), einen feststehenden oberen Arm (210) und einen feststehenden unteren Arm (212), die dazu bestimmt sind, sich in einem ersten Detektionszustand (Fig. 3) zu befinden, in dem der obere Arm (210) mit dem oberen Detektor (206) zusammenwirkt, während der untere Arm nicht mit dem unteren Detektor zusammenwirkt, wenn sich das Motorrohr (103) in der ersten Stellung befindet und in einem zweiten Detektionszustand (Fig. 2), in dem der untere Arm (212) mit dem unteren Detektor (208) zusammenwirkt, während der obere Arm nicht mit dem oberen Detektor zusammenwirkt, wenn sich das Motorrohr (103) in der zweiten Stellung befindet,
- Abfragemittel, die dazu bestimmt sind, das Umschalten der Detektionsmittel (113) vom zweiten Detektionszustand (Fig. 2) in den ersten Detektionszustand (Fig. 3) zu prüfen,
- Steuermittel (112), die dazu bestimmt sind, eine räpresentative Nachricht betreffend einen Öffnungsversuch am Rolladenpanzer (106) zu generieren, wenn die Abfragemittel das Umschalten der Detektionsmittel (113) detektieren, und
- Kommunikationsmittel (120), die dazu bestimmt sind, die genannte Nachricht zu übermitteln, wobei das Verfahren folgendes umfasst:
- einen Schritt (402), der im Herunterlassen des Rolladenpanzers (106) bis die Detektionsmittel (113) in den ersten Detektionszustand (Fig. 3) umschalten besteht, Schritt, in dessen Verlauf die Steuermittel (112) die Antriebsmittel (102) nach unten steuern,
- einen Schritt (406), der im Heraufziehen des Rolladenpanzers (106) bis die Detektionsmittel (113) in den zweiten Detektionszustand schalten (Fig. 2) besteht, Schritt, in dessen Verlauf die Steuermittel (112) die Antriebsmittel (102) nach oben steuern,
- einen, in der Abfrage des Zustands der Detektionsmittel (113) durch die Abfragemittel bestehenden Schritt (410), der mit sich selbst eine Schleife bildet, solange die Detektionsmittel (113) nicht vom zweiten Detektionszustand (Fig. 2) in den ersten Detektionszustand (Fig. 3) umschalten,
- einen Schritt (412), der in der Generierung einer räpresentativen Nachricht betreffend einen Offnungsversuch am Rolladenpanzer (106) durch die Steuermittel (112) besteht, und
- einen Schritt (414), der in der Übermittlung der genannten Nachricht durch die Steuermittel (112) über die Kommunikationsmittel (120) besteht.

2. Detektionsverfahren gemäß Patentanspruch 1, **dadurch gekennzeichnet, dass** das Verfahren nach dem Übermittlungschritt (414) mit dem Schritt des Herunterlassens (402) eine Schleife bildet.

3. Detektionsverfahren gemäß einem der Patentansprüche 1 oder 2, **dadurch gekennzeichnet, dass** dem Schritt des Hochziehens (406) ein Schritt der Verzögerung folgt, in dessen Verlauf das Hochziehen des Rolladenpanzers (106) fortgesetzt wird.

## Claims

1. Method for detecting an attempt at opening a panel (106) of a device (100) for the motorised closure of a structural opening, said motorised closure device (100) comprising:
- a panel (106) consisting of slats fixed to one another and having a space between them and having a bottom abutment position when the slats are in abutment against one another and the lowest slat is in abutment causing the stiffening of the panel (106), and a suspended position when the lowest slat is not in abutment, and
- driving means (102) comprising a winding tube (104) to which the highest slat is fixed and around which said panel (106) winds when rising and from which it unwinds when descending, and a driving tube (103) rotating said winding tube (104), said driving tube (103) comprising a fixed flange (108) and a bearing (110) able to rotate about the axis of said driving tube (103) on the flange (108), said driving tube (103) being able to rotate between a first position when the panel (106) is in the bottom abutment position and a second position when the panel (106) is in the suspended position, said driving tube (103) also comprising a protection tube (114) fitting on the bearing (110), by one of it ends, and in which detection means (113) carried by the bearing are housed, said flange (108) having an elongate aperture and the bearing (110) having a stud introduced into said aperture, the stud limiting the angular movement of the bearing with respect to the flange, and the motorised closure device (100) further comprising:
- driving means (116) housed in the protection tube (114) and comprising a driving shaft (118) provided with a male plug engaging with a female socket of the winding tube (104),
- the detection means (113) comprising a high detector (206), a low detector (208) in the form of beam-breaking optical detectors, a top arm (210) and a bottom arm (212) fixed to the flange (108) and intended to be in a first detection state (Fig. 3) where the top arm (210) cooperates with the high detector (206) while the bottom arm does not cooperate with the low detector when the driving tube (103) is in the first position, and in a second detection state (Fig. 2) where the bottom arm (212) cooperates with the low detector (208) while the top arm does not cooperate with the high detector when the driving tube (103) is in the second position,
- scrutiny means intended to check the tilting of the detection means (113) from the second detection state (Fig. 2) to the first detection state (Fig. 3),
- the control means (112) intended to generate a message representing an attempt to open the panel (106) when the scrutiny means detect the tilting of the detection means (113), and
- communication means (120) intended to transmit said message, the method comprising:
- a step (402) of lowering the panel (106) until the detection means (113) switch into the first detection state (Fig. 3), a step during which the control means (112) control the driving means (102) in descent,
- a step (406) of raising the panel (106) until the detection means (113) switch into the second detection state (Fig. 2), a step during which the control means (112) control the driving means (102) in ascent,
- a step (410) of scrutiny by the scrutiny means of the state of the detection means (113) that loops on itself as long as the detection means (113) do not switch from the second detection state (Fig. 2) to the first detection state (Fig. 3),
- a step (412) of generation of a message representing an attempt to open the panel (106) by the control means (112), and
- a step (414) of transmission of said message by the control means (112) via the communication means (120).

2. Detection method according to claim 1, **characterised in that**, after the transmission step (414), the method loops onto the descent step (402).

3. Detection method according to one of claims 1 or 2, **characterised in that** the ascent step (406) is followed by a time-delay step during which the raising of the panel (106) is continued.
